# FASCICULE DE BREVET EUROPEEN

(11) **EP 2 483 742 B1**
(45) Date de publication et mention de la délivrance du brevet: **20.05.2015**
(21) Numéro de dépôt: 10770614.5
(22) Date de dépôt: 24.09.2010
(51) Int. Cl.: G02F 1/15, G02F 1/155

(54) **DISPOSITIFS ELECTROCHROMES TRANSPARENTS COMPORTANT DES ELECTRODES D'ALIMENTATION ET DES ELECTRODES DE POLARISATION**
TRANSPARENTE ELEKTROCHROME VORRICHTUNGEN MIT VERSORGUNGSELEKTRODEN UND POLARISATIONSELEKTRODEN
TRANSPARENT ELECTROCHROMIC DEVICES WITH SUPPLY ELECTRODES AND POLARISATION ELECTRODES

(30) Priorité: 28.09.2009 FR 0956707
(43) Date de publication de la demande: 08.08.2012
(73) Titulaire: Essilor International (Compagnie Générale d'Optique), 94220 Charenton-le-Pont (FR)
(72) Inventeur: ARCHAMBEAU, Samuel, F-94220 Charenton-le-pont (FR); BIVER, Claudine, F-94220 Charenton-le-pont (FR); BOVET, Christian, F-94220 Charenton-le-pont (FR); CANO, Jean-Paul, F-94220 Charenton-le-pont (FR); DULUARD, Sandrine, F-94220 Charenton-le-pont (FR); SAUGEY, Anthony, F-94220 Charenton-le-pont (FR)
(74) Mandataire: Cabinet Plasseraud
(86) Numéro de dépôt international: PCT/FR2010/052013
(87) Numéro de publication internationale: WO 2011/036420

(56) Documents cités:
- JP-A- 59 219 723
- JP-A- 2006 119 344
- US-A- 4 285 575
- US-A1- 2002 005 977

## Description

La présente invention concerne des systèmes électrochromes transparents à plusieurs électrodes de polarisation, ainsi que des dispositifs électrochromes qui comprennent de tels systèmes.

De façon connue, un système électrochrome est un élément transparent dont les caractéristiques optiques de transmission lumineuse peuvent varier en réponse à un courant électrique qui est appliqué entre deux bornes d'alimentation du système. Pour cela, un système électrochrome comprend usuellement :
- deux parois externes qui définissent un volume fermé, le système étant transparent pour une direction de regard traversant les parois externes et le volume fermé entre deux côtés opposés ;
- un liquide ou gel qui est contenu dans le volume fermé ;
- des premières et secondes substances électroactives qui sont réparties dans le liquide ou gel, avec des potentiels respectifs d'oxydo-réduction qui sont différents, certaines au moins des premières et secondes substances électroactives ayant un effet optique variable entre une forme oxydée et une forme réduite de ces substances ; et
- une paire d'électrodes d'alimentation transparentes, qui sont destinées à être reliées respectivement à deux bornes de sortie d'une source électrique variable pour alimenter le système en courant électrique, de façon à transférer des électrons vers ou à partir de certaines au moins des substances électroactives, d'une façon inverse entre les premières et secondes substances électroactives à un même instant d'un fonctionnement du système.

Un tel système est notamment dévoilé dans les documents US 4 285 575 et JP 2006119344.

Dans le cadre de la présente invention, on entend par élément transparent un élément optique qui permet à un utilisateur qui est situé d'un côté de l'élément de voir distinctement, à travers cet élément, des objets qui sont situés d'un autre côté de et à distance de l'élément. Autrement dit, une image de l'objet est formée sur la rétine de l'utilisateur, par de la lumière qui se propage sur une première distance non-nulle entre l'objet et l'élément transparent, puis traverse l'élément transparent et se propage sur une seconde distance non-nulle entre l'élément transparent et un oeil de l'utilisateur. Pour cela, une diffusion et/ou une diffraction lumineuse(s) que provoquerait l'élément optique doit (doivent) être suffisamment faible(s), de sorte que l'image d'un point d'objet à travers l'élément transparent soit un point d'image et non une tache diffuse dans l'image qui est perçue par l'utilisateur.

Un tel système électrochrome est destiné à varier la valeur de la transmission lumineuse à travers ce système, entre un état clair pour lequel la transmission lumineuse possède une valeur qui est élevée, et un état foncé pour lequel elle possède une valeur qui est basse. Pour cela, lorsqu'une tension électrique appropriée est produite entre les deux électrodes d'alimentation par une source, les premières et secondes substances électroactives sont oxydées pour les unes et réduites simultanément pour les autres, respectivement sur l'électrode d'alimentation qui est connectée à une borne positive de la source de tension, et sur l'électrode qui est connectée à une borne négative de la même source de tension. Les substances oxydées et réduites ainsi formées peuvent alors diffuser à l'intérieur du volume fermé, et se neutraliser réciproquement lorsqu'elles se rencontrent. Or, une telle neutralisation provoque une consommation de courant électrique plus importante. Simultanément, à cause de cette neutralisation, la transmission lumineuse du système électrochrome à l'état foncé peut être limitée à une valeur de saturation supérieure à la valeur qui résulterait des concentrations des substances électroactives. Autrement dit, la neutralisation réciproque des substances électroactives peut réduire la différence entre les valeurs de la transmission lumineuse du système entre les deux états clair et foncé, aussi appelée dynamique du système électrochrome.

De plus, une fois que certaines des substances électroactives ont réagi au contact de l'une des électrodes d'alimentation, elles peuvent rester à proximité de cette électrode et limitent alors l'accès d'autres substances électroactives qui n'ont pas encore réagi à cette même électrode d'alimentation. Il en résulte un ralentissement des commutations du système électrochrome entre ses états clair et foncé. Un tel ralentissement est néfaste par rapport à la fonction et l'utilisation du système dans un grand nombre d'applications.

Dans ces conditions, un des buts de l'invention consiste à proposer des structures de systèmes électrochromes dont les consommations en courant électrique sont réduites.

Un autre but de l'invention consiste à proposer des structures de systèmes électrochromes qui permettent d'augmenter la dynamique de commutation.

Un autre but encore de l'invention consiste à proposer des structures de systèmes électrochromes qui présentent des vitesses de commutation supérieures.

Encore un autre but de l'invention consiste à proposer des systèmes électrochromes qui soient simples à fabriquer.

La présente invention propose alors deux dispositifs électrochromes qui constituent chacun une solution à ces problèmes techniques. Chaque dispositif électrochrome de l'invention est du type qui a été décrit précédemment. En particulier, il est transparent pour permettre une vision distincte à travers le système.

En outre, dans les dispositifs de l'invention, les deux électrodes d'alimentation sont portées ensemble par une même des deux parois externes de chacun de ces systèmes.

Un premier dispositif électrochrome qui est proposé par la présente invention est selon la revendication 1. Il comprend notamment une paire de premières électrodes de polarisation transparentes, qui sont portées ensemble par l'autre des deux parois externes que celle qui porte les électrodes d'alimentation, sans contact avec ces électrodes d'alimentation à l'intérieur du système. De plus, ces premières électrodes de polarisation sont situées une à une en vis-à-vis des électrodes d'alimentation, de part et d'autre du volume fermé selon une direction perpendiculaire aux parois externes.

Dans ce premier dispositif, chaque première électrode de polarisation et l'électrode d'alimentation qui est située en vis-à-vis sont reliées en outre respectivement à deux bornes de sortie d'une deuxième source électrique variable, avec des polarités respectives qui sont identiques pour les bornes de sortie des première et deuxième sources électriques qui sont reliées à une même des électrodes d'alimentation, ces polarités étant considérées respectivement par rapport à l'autre borne de sortie de la source électrique correspondante.

Un second dispositif électrochrome qui est proposé par la présente invention est selon la revendication 5; il comprend de même la paire des premières électrodes de polarisation, avec un agencement de ces premières électrodes de polarisation qui est identique à celui du premier système de l'invention ci-dessus. Mais le second dispositif électrochrome comprend en outre une paire de secondes électrodes de polarisation transparentes, qui sont situées entre les électrodes d'alimentation d'une part et la paroi externe qui porte ces électrodes d'alimentation d'autre part. En outre, les secondes électrodes de polarisation sont situées une à une au droit des électrodes d'alimentation selon la direction perpendiculaire aux parois externes, sans contact avec ces électrodes d'alimentation à l'intérieur du système.

Dans ce second dispositif, chacune des premières électrodes de polarisation et celle des secondes électrodes de polarisation qui est située au droit de cette première électrode de polarisation selon la direction perpendiculaire aux parois externes, sont reliées respectivement à deux bornes de sortie d'une deuxième source électrique variable. En outre, les bornes de sortie des première et deuxième sources électriques qui sont reliées respectivement à l'une des électrodes d'alimentation et l'une des secondes électrodes de polarisation qui sont situées au droit l'une de l'autre, ont des polarités respectives qui sont identiques, ces polarités étant considérées respectivement par rapport à l'autre borne de sortie de la source électrique correspondante.

De façon générale, toutes les électrodes de polarisation qui sont introduites par l'invention sont isolées électriquement les unes des autres à l'intérieur du système électrochrome, et isolées par rapport à chaque électrode d'alimentation.

Toutefois, le premier dispositif électrochrome qui est proposé par l'invention peut être déduit du second, en réunissant chaque électrode d'alimentation avec celle des secondes électrodes de polarisation qui est alignée avec elle selon la direction perpendiculaire aux parois externes. Pour cette raison, les deux dispositifs résolvent d'une même façon les mêmes problèmes techniques qui ont été indiqués plus haut.

Dans les deux dispositifs électrochromes de l'invention, au moins une source électrique supplémentaire est prévue pour connecter chaque première électrode de polarisation. Chaque dispositif est donc relié électriquement d'une façon générale à une ou deux source(s) électrique(s) qui est (sont) dédiée(s) à sa polarisation, en plus de la première source électrique qui est dédiée à l'alimentation du système en courant électrique. Par opposition à cette première source, chaque source électrique qui est dédiée à la polarisation applique une tension électrique entre deux des électrodes du dispositif électrochrome, mais sans délivrer de courant électrique à ces électrodes.

Dans les deux cas, chaque deuxième source électrique produit un champ électrique dans le volume fermé du dispositif qui contient les substances électroactives. Ce champ électrique attire les substances qui ont été oxydées ou réduites sur l'une des électrodes d'alimentation, vers le côté opposé du volume fermé, plus que les mêmes substances avant qu'elles aient réagi sur la même électrode d'alimentation. De cette façon, l'accès aux électrodes d'alimentation par les substances électroactives qui vont être oxydées ou réduites est amélioré, ce qui augmente la vitesse de commutation du dispositif.

En outre, les premières substances électroactives qui ont été oxydées et les secondes substances électroactives qui ont été réduites, ou vice-versa en fonction du sens de la commutation en cours du dispositif électrochrome, peuvent être attirées vers des premières électrodes de polarisation qui sont différentes. Elles peuvent ainsi être maintenues à distance les unes des autres, ce qui limite leur neutralisation réciproque. La consommation électrique du dispositif et la saturation de son état coloré qui résulteraient de cette neutralisation sont ainsi évitées, ou en partie supprimées. En particulier, les dynamiques de commutation des dispositifs électrochromes sont ainsi accrues.

Une telle séparation des formes oxydées et réduites des substances électroactives qui sont formées lors d'une même commutation du système électrochrome peut être d'autant plus efficace que ces formes ont des charges électriques respectives qui sont différentes, et notamment que la forme oxydée de chaque substance électroactive ait une charge électrique qui est supérieure à celle de la forme réduite de l'autre substance électroactive. Autrement dit, les premières substances électroactives dans leur forme oxydée ont de préférence chacune une charge électrique qui est supérieure ou égale à la charge électrique de chaque seconde substance électroactive dans la forme réduite de cette dernière. Symétriquement, chaque seconde substance électroactive dans sa forme oxydée a de préférence une charge électrique qui est supérieure ou égale à celle de chaque première substance électroactive réduite. Pour ces comparaisons les charges électriques des substances sont considérées en valeurs algébriques pour être comparées entre elles. Dans ce cas, les deux commutations, de l'état clair vers l'état foncé et inversement, sont favorisées par l'invention. Si la charge électrique de la forme oxydée de l'une des deux substances électroactives est supérieure à celle de la forme réduite de l'autre substance électroactive, pour l'un seulement des deux états du dispositif électrochrome, cet état est amélioré par l'invention.

Toutefois, l'attraction de certaines formes des substances électroactives vers l'une des électrodes de polarisation, par rapport à d'autres substances électroactives dans la forme opposée, peut résulter des mobilités respectives de ces substances lorsqu'elles ont des charges électriques qui sont égales.

Néanmoins, l'effet de l'invention est d'autant plus important que la charge électrique de la forme oxydée de l'une des substances électroactives est strictement supérieure à la charge électrique de la forme réduite de l'autre substance qui est formée lors d'une même commutation.

Par ailleurs, étant donné que toutes les électrodes, d'alimentation et de polarisation, sont portées par les parois externes du dispositif celui-ci est simple à fabriquer. En effet, chaque électrode peut être réalisée sous la forme d'une couche mince qui est déposée sur la paroi externe correspondante, sans que des éléments de support additionnels soient nécessaires à l'intérieur du dispositif électrochrome. De plus, les électrodes d'une même paire peuvent avoir des motifs identiques chacune sur la paroi externe correspondante, de sorte qu'un même masque peut être utilisé pour chaque paire d'électrodes, pour définir ces motifs.

Dans divers modes de réalisation de dispositifs électrochromes selon l'invention, le volume fermé qui contient le liquide ou gel dans lequel sont réparties les substances électroactives, peut être divisé en cellules juxtaposées parallèlement aux parois externes. Dans ce cas, chaque cellule contient une portion du liquide ou gel qui est soumise aux effets électriques, à l'intérieur de cette cellule, d'une seule ou des deux électrodes de chaque paire.

Un dispositif électrochrome selon l'invention peut former une partie au moins de nombreux composants optiques, tels qu'un verre de lunettes, un verre de masque, une lentille optique, une visière de casque, un hublot d'avion, un vitrage, etc.

Les dispositifs électrochromes selon l'invention comprennent aussi
- la première source électrique variable, avec les deux bornes de sortie de cette première source électrique qui sont reliées respectivement aux électrodes d'alimentation, et qui est adaptée pour alimenter le système en courant électrique en appliquant entre ses deux électrodes d'alimentation une tension électrique supérieure à la différence entre les potentiels respectifs d'oxydo-réduction des premières et secondes substances électroactives ; et
- au moins une deuxième source électrique variable, avec une première borne de sortie de cette deuxième source électrique qui est reliée à au moins une des premières électrodes de polarisation et
une seconde borne de sortie de la deuxième source électrique reliée à l'électrode d'alimentation qui est située en vis-à-vis de la première électrode de polarisation à laquelle est reliée la première borne de sortie de la même deuxième source électrique. Dans ce cas, la première borne de sortie de la deuxième source électrique peut en outre être reliée à l'autre électrode d'alimentation que celle à laquelle est reliée la seconde borne de sortie de cette deuxième source électrique. Simultanément, la seconde borne de sortie de la deuxième source électrique peut en outre être reliée à l'autre première électrode de polarisation que celle à laquelle est reliée la première borne de sortie de la deuxième source électrique. Les bornes de sortie des première et deuxième sources électriques qui sont reliées à une même des électrodes d'alimentation ont alors des polarités respectives qui sont identiques , ces polarités étant considérées respectivement par rapport à l'autre borne de sortie de la source électrique correspondante. Un dispositif électrochrome qui fonctionne avec deux sources électriques seulement est ainsi obtenu.

Un dispositif à trois sources électriques peut aussi être formé avec le premier dispositif électrochrome de l'invention. Pour cela, une seconde borne de sortie de la deuxième source électrique est reliée à l'électrode d'alimentation qui est située en vis-à-vis de la première électrode de polarisation à laquelle est reliée la première borne de sortie de cette deuxième source électrique. Le dispositif comprend alors en outre une troisième source électrique variable, qui possède une première borne de sortie reliée à l'autre électrode d'alimentation que celle à laquelle est reliée la seconde borne de sortie de la deuxième source électrique, et une seconde borne de sortie reliée à l'autre première électrode de polarisation que celle à laquelle est reliée la première borne de sortie de la deuxième source électrique. Dans ce cas, les bornes de sortie des première et deuxième ou troisième sources électriques qui sont reliées à une même des électrodes d'alimentation ont des polarités respectives qui sont identiques à certains instants au moins du fonctionnement du système, ces polarités étant considérées respectivement par rapport à l'autre borne de sortie de la source électrique correspondante.

De façon similaire, des dispositifs à deux ou trois sources électriques sont possibles pour le second dispositif électrochrome proposé par l'invention. Pour les connexions des deuxième et/ou troisième source(s) électrique(s), chaque électrode d'alimentation est remplacée, par rapport aux connexions qui ont été décrites ci-dessus pour le premier dispositif de l'invention, par la seconde électrode de polarisation qui est alignée avec elle selon la direction perpendiculaire aux parois externes.

D'autres particularités et avantages de la présente invention apparaîtront dans la description ci-après d'exemples de réalisation non limitatifs, en référence aux dessins annexés, dans lesquels :
- les figures 1 a et 1 b sont des vues en coupe de deux premiers systèmes électrochromes non conformes à l'invention ;
- les figures 2a et 2b représentent des dispositifs électrochromes selon l'invention et comprenant des premiers systèmes conformes aux figures 1a et 1b, respectivement à deux et trois sources électriques ;
- les figures 3a et 3b correspondent respectivement aux figures 1a et 1b, pour deux seconds systèmes électrochromes non conformes à l'invention ; et
- les figures 4a et 4b représentent des dispositifs selon l'invention et correspondent respectivement aux figures 2a et 2b, pour les seconds systèmes des figures 3a et 3b.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

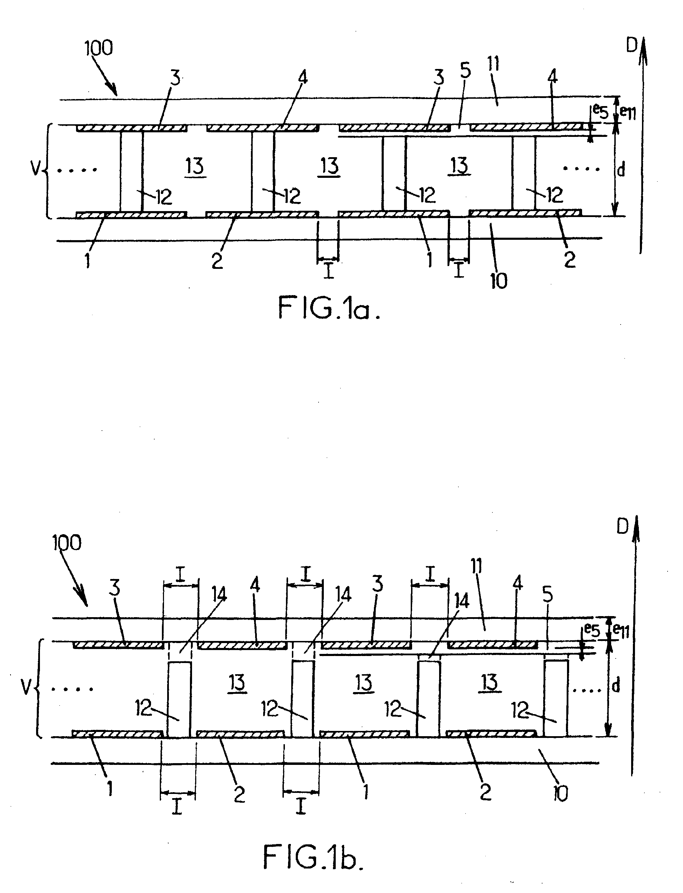

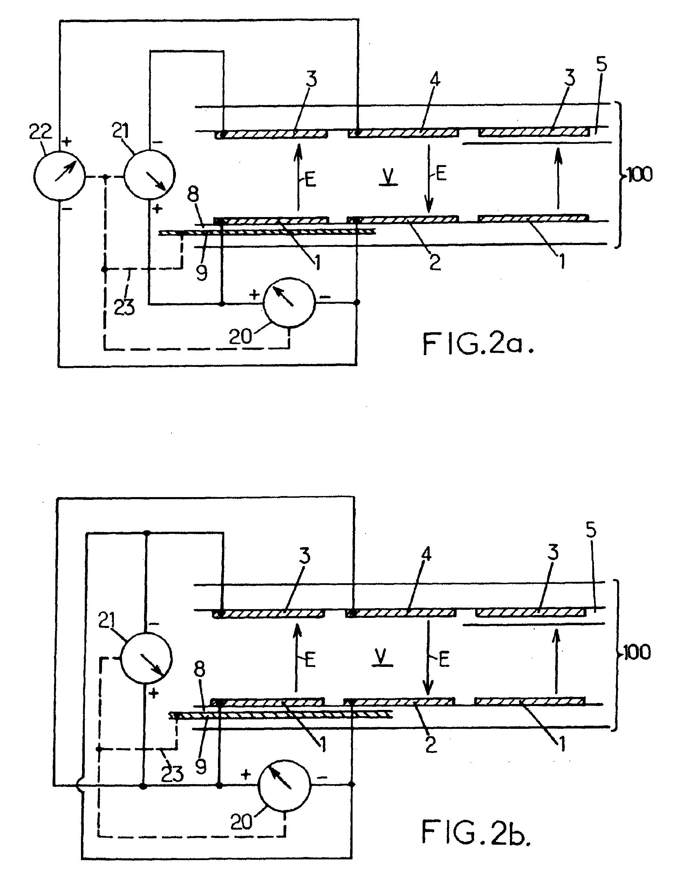

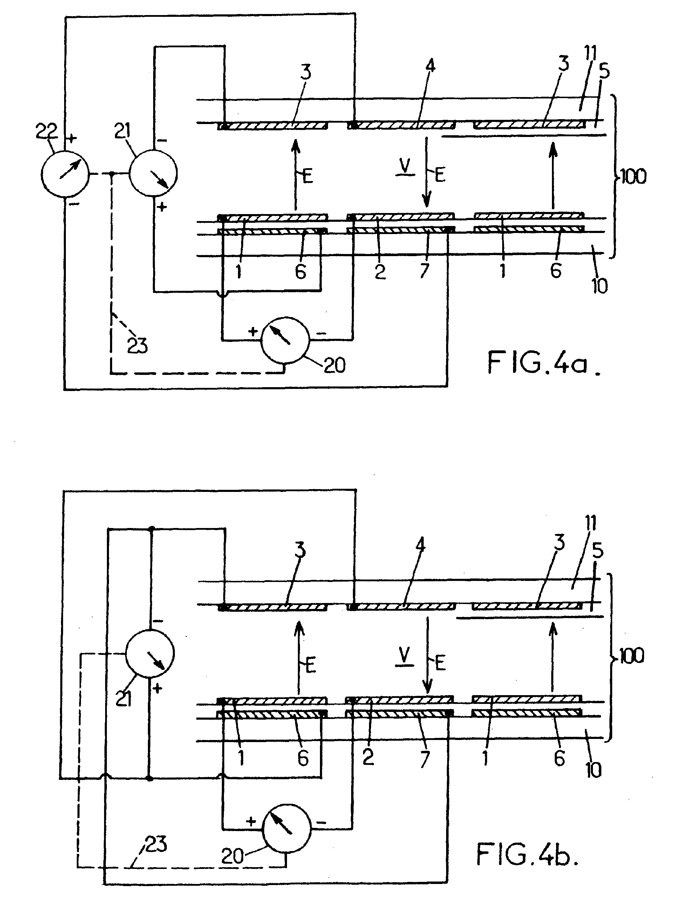

Toutefois, les parois internes 12 n'ont pas été représentées sur les figures 2a, 2b, 4a et 4b, étant entendu qu'elles sont facultatives pour toute l'invention, en pouvant être conformes aux figures 1 a et 3a, ou aux figures 1 b et 3b, notamment.

De plus, à titre d'illustration, les dispositifs qui sont décrits maintenant sont destinés à former des verres de lunettes, mais il est entendu qu'ils peuvent former d'autres éléments transparents, notamment en adaptant convenablement les parois externes de ces systèmes.

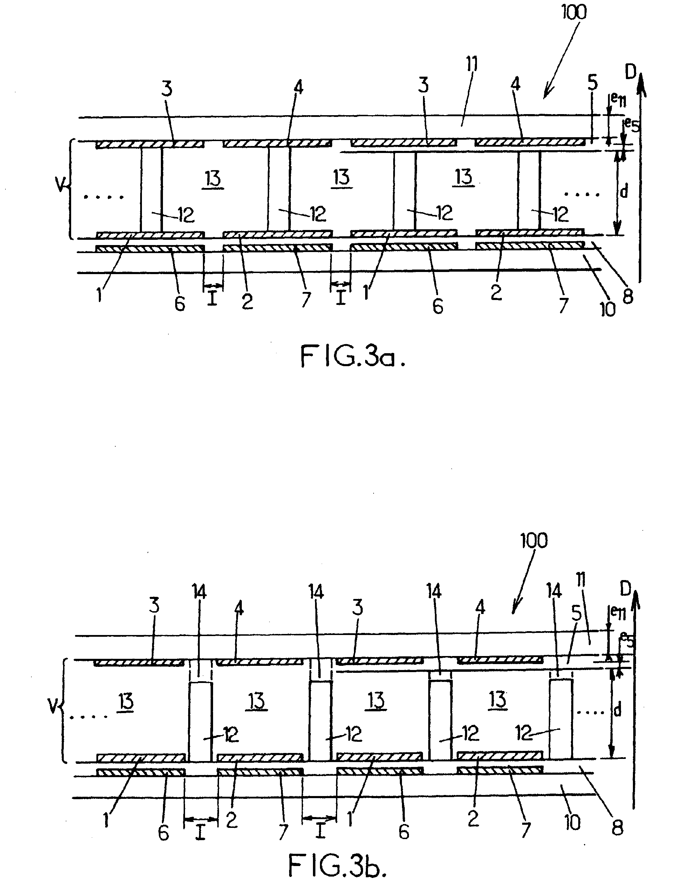

Conformément aux figures 1a, 1b et 3a, 3b, un système électrochrome 100 comporte deux parois externes 10 et 11 qui sont parallèles, et qui délimitent un volume interne V. Le volume V est fermé de façon étanche, par exemple en utilisant un joint périphérique non représenté. Les parois externes 10 et 11 peuvent être un film souple, tel qu'un film de polyéthylène téréphtalate (PET), un film de polycarbonate (PC) ou un film de polyimide. Un tel film peut avoir une épaisseur e₁₁ de 50 µm (micromètre), en particulier. La paroi externe 10 peut être également un verre de lunettes, en matériau minéral, organique ou hybride couramment utilisé dans le domaine ophtalmique.

Toutes les électrodes d'alimentation et de polarisation qui sont énumérées dans la suite sont isolées électriquement les unes des autres à l'intérieur du système 100. Elles peuvent être en oxyde d'indium dopé à l'étain (ITO pour «indium-tin oxide» en anglais) ou en oxyde d'étain dopé au fluor (SnO₂:F). Ces électrodes peuvent être déposées sur la face interne de la paroi 10, 11 correspondante sous forme de couches minces à motifs, avec une épaisseur de couche qui peut être comprise entre 0,1 µm et 3 µm, par exemple.

La paroi externe 10 porte deux électrodes d'alimentation qui sont référencées 1 et 2. Ces électrodes 1 et 2 sont en contact avec un liquide ou gel qui est contenu dans le volume V. Elles peuvent avoir des motifs respectifs complémentaires quelconques, tout en restant séparées l'une de l'autre par un intervalle I parallèlement à la paroi externe 10. Cet intervalle I peut assurer que les électrodes 1 et 2 soient isolées électriquement entre elles. En particulier, les électrodes 1 et 2 peuvent avoir des motifs en peigne, avec des dents de peigne qui sont imbriquées selon un pas d'alternance qui peut être compris entre 50 µm et 1,5 mm (millimètre), par exemple. L'intervalle I peut avoir une largeur de 18 µm, par exemple.

La paroi externe 11 porte deux premières électrodes de polarisation qui sont référencées 3 et 4. Ces électrodes 3 et 4 sont situées une à une en vis-à-vis des électrodes 1 et 2, de part et d'autre du volume V, selon une direction D qui est perpendiculaire aux parois externes 10 et 11. Ainsi, l'électrode 3 est alignée avec l'électrode 1 selon la direction D, et l'électrode 4 est alignée avec l'électrode 2.

Dans tous les systèmes électrochromes 100 intégrés dans des dispositifs selon l'invention, au moins un film isolant électriquement est disposé sur les électrodes de polarisation 3 et 4, entre celles-ci et le volume V, pour supprimer le contact entre chacune de ces électrodes de polarisation 3, 4 et le liquide ou gel. Dans toutes les figures, un tel film isolant est référencé 5 et n'est représenté que sur une partie des systèmes 100 correspondants. Le film 5 peut être en silice (SiO₂) avec une épaisseur e₅ qui est inférieure à 0,1 µm, par exemple.

L'épaisseur d du volume V selon la direction D peut être de 20 µm, par exemple.

Les parois externes 10 et 11 ainsi que les électrodes 1 à 4 sont transparentes pour des rayons lumineux qui traversent le système 100 entre deux côtés opposés de celui-ci, notamment parallèlement à la direction D.

Le milieu fluide qui est enfermé dans le volume V est un liquide ou un gel, en fonction de sa composition. Il contient les substances électroactives qui sont destinées à être oxydées ou réduites sur les électrodes d'alimentation 1 et 2 lors d'un fonctionnement du système 100. Il peut aussi contenir d'autres additifs tels qu'un solvant commun aux substances électroactives, des agents anti-UV, des fluidifiants, etc.

Les substances électroactives qui sont contenues dans le volume V peuvent être, à titre d'exemple illustratif :
- la N,N,N',N' tétraméthyl-phénylènediamine, qui possède une valeur d'environ 0,2 V (volt) de potentiel d'oxydo-réduction par rapport à une électrode de référence au calomel saturé. Elle est incolore et neutre électriquement dans sa forme réduite, et bleue avec une charge électrique positive dans sa forme oxydée ; et
- l'éthyl-anthraquinone, qui possède une valeur d'environ -1,5 V du potentiel d'oxydo-réduction par rapport à l'électrode au calomel saturé. Il est incolore dans sa forme oxydée et rouge dans sa forme réduite. De plus, la molécule d'éthyl-anthraquinone est neutre dans sa forme oxydée, et chargée négativement dans sa forme réduite.

Lorsque la tension est nulle entre les deux électrodes d'alimentation 1 et 2, la première de ces deux substances est dans sa forme réduite, et la seconde dans sa forme oxydée, à cause de leurs valeurs respectives du potentiel d'oxydo-réduction. Le système électrochrome est alors dans son état clair, avec une valeur élevée de la transmission lumineuse, par exemple supérieure à 70%, de préférence supérieure à 80%. Lorsque la tension qui est appliquée entre les deux électrodes d'alimentation 1 et 2 est supérieure à 1,7 V environ, la N,N,N',N' tétraméthyl-phénylènediamine est oxydée au contact de celle de ces électrodes 1 et 2 qui est reliée à la borne de sortie positive de la source électrique d'alimentation du système électrochrome, et l'éthyl-anthraquinone est réduite au contact de l'autre électrode d'alimentation qui est reliée à la borne de sortie négative de la même source électrique. Le système électrochrome 100 devient alors absorbant avec une couleur bleue. Sa transmission lumineuse peut alors être inférieure à 20%, par exemple, voire inférieure à 10%, en fonction des concentrations des espèces électroactives notamment.

Ces deux substances électroactives peuvent être introduites dans le volume V avec chacune une concentration comprise entre 0,001 et 1 mol.l⁻¹ (mole par litre), en fonction du niveau d'absorption lumineuse qui est recherché pour l'état absorbant du système électrochrome 100. Par exemple, les concentrations des deux espèces électroactives citées ci-dessus peuvent être égales à 0,2 mol.l⁻¹.

De façon facultative, le système 100 peut comprendre en outre un réseau de parois internes 12, qui forme une partition du volume V en cellules 13 juxtaposées parallèlement aux parois externes 10 et 11. Les parois internes 12 sont perpendiculaires aux parois externes 10 et 11, et elles divisent le liquide ou gel qui est contenu dans le volume V en portions de liquide ou gel qui sont respectivement contenues dans les cellules 13. La composition et le mode de réalisation des parois 12 sont supposés connus de l'Homme du métier et ne sont pas répétés ici. Par exemple, les parois 12 peuvent avoir chacune une épaisseur qui est supérieure à 0,1 µm, de préférence comprise entre 0,5 et 8 µm, et chaque cellule 13 peut avoir une dimension qui est comprise entre 50 µm et 1,5 mm par exemple, parallèlement aux parois externes 10 et 11. Les cellules 13 forment alors un pavage du système électrochrome 100, parallèlement aux parois 10 et 11, dont le motif peut être quelconque, régulier, par exemple hexagonal, ou aléatoire ou pseudo-aléatoire.

Selon un premier mode de partition du volume V qui est illustré par la figure 1a, les deux électrodes d'alimentation 1 et 2 sont chacune en contact avec le liquide ou gel qui contenu dans chaque cellule 13, et le liquide ou gel qui contenu dans chaque cellule contient à la fois les premières et les secondes substances électroactives. Ainsi, les deux électrodes 1 et 2 sont en contact avec les portions de liquide ou gel de toutes les cellules 13. Selon un mode de réalisation avantageux, certaines des parois internes 12 peuvent s'étendre entre les électrodes 1 et 3, et d'autres parois internes 12 entre les électrodes 2 et 4, avec des prolongements des électrodes de part et d'autre de chaque paroi interne 12 correspondante, parallèlement aux parois externes 10 et 11. Ainsi, chacune des électrodes 1 à 4 s'étend continûment entre des cellules 13 adjacentes, et chaque cellule 13 peut être alimentée par les deux électrodes 1 et 2, par les prolongements respectifs de celles-ci à l'intérieur de cette cellule.

Selon un second mode de partition du volume V qui est illustré par la figure 1b, pour certaines au moins des cellules 13, une seule des deux électrodes d'alimentation 1 et 2 est en contact avec le liquide ou gel qui est contenu dans chaque cellule. Dans ce cas, une première cellule 13 qui est alimentée par l'une des électrodes 1 et 2 est adjacente avec une seconde cellule 13 qui est alimentée par l'autre électrode 1 ou 2. Selon un mode de réalisation possible, certaines des parois internes 12 peuvent s'étendre entre les parois externes 10 et 11 au droit des intervalles de séparation inter-électrodes I selon la direction D. A l'intérieur du système 100, des ponts ioniques 14 connectent électriquement des cellules 13 qui sont voisines et alimentées séparément par l'électrode 1 et par l'électrode 2. De tels ponts ioniques peuvent être réalisés de l'une des façons couramment utilisées en électrochimie. Par exemple, les ponts ioniques 14 peuvent être situés à des extrémités des parois internes 12, par exemple du côté de la paroi externe 11. Ils peuvent aussi être réalisés dans les parois internes 12, notamment lorsque celles-ci sont perméables à des ions de petites tailles qui sont contenus dans le liquide ou gel avec les substances électroactives. Ces ponts ioniques 14 assurent une neutralité électrique du contenu de chaque cellule 13 à chaque instant du fonctionnement du système 100. Ils permettent ainsi de maintenir le système 100 dans un état quelconque d'une façon stationnaire.

Lorsqu'une seule des deux électrodes d'alimentation 1 ou 2 alimente chaque cellule 13 du système 100, le liquide ou gel peut contenir des premières substances électroactives sans secondes substances électroactives à l'intérieur des cellules 13 qui sont alimentées par l'une de ces deux électrodes, et des secondes substances électroactives sans premières substances électroactives à l'intérieur des cellules 13 qui sont alimentées par l'autre électrode d'alimentation. Par exemple, pour le mode de partition du volume V de la figure 1b, celles des cellules 13 qui sont alimentées par l'électrode 1 peuvent ne contenir que des molécules de tétraméthyl-phénylènediamine, et celles des cellules 13 qui sont alimentées par l'électrode 2 peuvent ne contenir que des molécules d'éthyl-anthraquinone. Dans ce cas, la première commutation du système 100 après sa fabrication est effectuée en reliant l'électrode 1 à la borne de sortie positive d'une source électrique et l'électrode 2 à la borne de sortie négative de cette source.

Dans les dispositifs selon l'invention comprenant les systèmes 100 qui sont décrits, une première source électrique variable 20 est connectée électriquement, par deux bornes de sortie de courant de cette première source, aux électrodes d'alimentation 1 et 2. La source 20 est adaptée pour produire entre ses bornes de sortie, une tension électrique qui est supérieure ou égale à la différence entre les potentiels d'oxydo-réduction respectifs des premières et secondes substances électroactives. Elle produit alors un courant électrique qui traverse le système 100 entre les électrodes 1 et 2. Lors d'une commutation du système 100 de l'état clair vers l'état foncé, des molécules de tétraméthyl-phénylènediamine sont oxydées au contact de celle des électrodes d'alimentation 1 et 2 qui est reliée à la borne de sortie positive de la source 20, et des molécules d'éthyl-anthraquinone sont réduites au contact de l'autre électrode 1 ou 2 qui est reliée à la borne de sortie négative de la source 20. D'après la connexion de la source 20 qui est représentée sur les figures 2a, 2b, 4a et 4b, les molécules de tétraméthyl-phénylènediamine sont ainsi oxydées sur l'électrode 1 et les molécules d'éthyl-anthraquinone sont réduites à l'électrode 2. Pour revenir à l'état clair, la polarité de la source 20 est inversée par rapport aux électrodes d'alimentation 1 et 2. Les molécules de tétraméthyl-phénylènediamine qui avaient été oxydées sont alors réduites sur l'électrode 1, et les molécules préalablement réduites d'éthyl-anthraquinone sont ré-oxydées sur l'électrode 2.

La source 20 peut être de type source de courant continu ou source impulsionnelle.

Conformément à la figure 2a, une deuxième source électrique variable 21 est connectée électriquement entre l'électrode d'alimentation 1 et l'électrode de polarisation 3. Simultanément, une troisième source électrique variable 22 est connectée électriquement entre l'électrode d'alimentation 2 et l'électrode de polarisation 4. Chaque source 21 ou 22 est adaptée pour produire une tension électrique entre les deux électrodes du système 100 auxquelles elle est reliée, sans délivrer de courant électrique. Pour cette raison, les sources 21 et 22 sont appelées sources de polarisation. Elles produisent donc chacune un champ électrique dans le volume V, entre l'une des électrodes d'alimentation 1 ou 2 et l'électrode de polarisation 3 ou 4 qui est située en vis-à-vis de cette électrode d'alimentation.

Lors d'une commutation du système 100, les polarités respectives des sources de polarisation 21 et 22 sont asservies à la polarité de la source d'alimentation 20. Ainsi, lors d'une commutation de l'état clair vers l'état foncé, l'électrode d'alimentation 1 est reliée à la borne de sortie positive de la source 21, en plus de la borne de sortie positive de la source 20. L'électrode de polarisation 3 est alors reliée à la borne de sortie négative de la source 21. Simultanément, l'électrode d'alimentation 2 est reliée à la borne de sortie négative de la source 22, en plus de la borne de sortie négative de la source 20, et l'électrode de polarisation 4 est reliée à la borne de sortie positive de la source 22. Sous l'effet du champ électrique qui est produit par la source 21 entre les électrodes 1 et 3, les molécules oxydées de tétraméthyl-phénylènediamine, qui sont chargées positivement, migrent à partir de l'électrode 1 vers l'électrode 3. Cette migration assure un meilleur accès de l'électrode d'alimentation 1 aux molécules de tétraméthyl-phénylènediamine qui n'ont pas encore réagi.

De même, les molécules d'éthyl-anthraquinone qui sont réduites sur l'électrode d'alimentation 2 lors de la coloration du système 100, avec une forme réduite chargée négativement, migrent ensuite vers l'électrode de polarisation 4. Ainsi, les formes oxydées et réduites de toutes les substances électroactives, qui sont produites simultanément sur les électrodes d'alimentation 1 et 2 lors d'une commutation du système, restent éloignées les unes des autres. Celles qui sont oxydées restent à proximité de celle des électrodes de polarisation 3 ou 4 qui est connectée à la borne de sortie négative de l'une des sources 21 ou 22, et les substances électroactives qui sont réduites restent à proximité de l'autre électrode de polarisation 3 ou 4, connectée à la borne de sortie positive de l'autre source 21 ou 22. Etant ainsi séparées spatialement dans des zones différentes du volume V, leur neutralisation mutuelle est empêchée. Sur toutes les figures, les flèches qui sont notées E à l'intérieur du volume V représentent les orientations des champs électriques qui viennent d'être décrits.

Ainsi, en fonction de la charge électrique des formes oxydées et réduites des substances électroactives, l'utilisation des électrodes de polarisation selon l'invention procure les effets bénéfiques suivants :
- une attraction vers les électrodes d'alimentation en courant électrique du système électrochrome, pour celles des substances électroactives qui sont chargées électriquement et destinées à réagir sur ces électrodes lors d'une commutation du système ;
- un éloignement par rapport aux électrodes d'alimentation, pour celles des substances électroactives qui ont déjà réagi sur les électrodes d'alimentation, afin d'améliorer l'accès à ces électrodes aux substances électroactives qui n'ont pas encore réagi ; et
- une séparation dans des zones différentes du volume interne des systèmes électrochromes, des substances électroactives qui ont déjà réagi sur les électrodes d'alimentation.

Une vitesse de commutation supérieure des systèmes électrochromes résulte des deux premiers effets. En outre, le dernier effet évite que les substances électroactives ne se neutralisent réciproquement après avoir été oxydées ou réduites sur les électrodes d'alimentation. Ainsi, la consommation de courant électrique supplémentaire que provoquerait cette neutralisation réciproque est évitée. La saturation de la transmission lumineuse du système dans l'état foncé, à une valeur supérieure à celle qui correspond aux concentrations des substances électroactives, et qui serait aussi due à la neutralisation réciproque des substances électroactives, est évitée de même.

Le perfectionnement qui est maintenant décrit permet d'éviter totalement toute neutralisation réciproque des espèces électroactives. Il s'applique lorsque le volume V est divisé en cellules 13 qui sont alimentées chacune par une seule des deux électrodes 1 ou 2. Dans une telle configuration du système 100, certaines au moins des parois internes 12 peuvent s'étendre en direction de la paroi externe 11 qui porte les électrodes de polarisation 3 et 4, selon la direction D, jusqu'à fermer les cellules 13 du côté de la paroi externe 11. Une telle fermeture des cellules 13 est adaptée pour que des substances électroactives qui sont à proximité des électrodes de polarisation 3 et 4 ne puissent pas passer d'une cellule 13 à une cellule voisine. Toutefois, il est possible simultanément que des ions de plus petites tailles traversent ces parois 12 à proximité des électrodes 3 et 4, notamment lorsqu'un pont ionique 14 est prévu à cet endroit du volume V.

Bien que les avantages de l'invention aient été décrits pour la commutation du système électrochrome dans le sens de sa coloration, l'Homme du métier saura, à la lumière de cette description, les transposer au cas de la commutation inverse du système, de son état foncé vers son état clair. Les mêmes avantages sont apportés par l'invention aux commutations des deux sens.

D'après la fonction des électrodes de polarisation introduites par l'invention, les substances électroactives ne sont pas oxydées ni réduites sur ces électrodes. L'utilisation du film isolant 5 assure qu'aucune réaction d'oxydo-réduction ne puisse se produire sur les électrodes de polarisation 3 et 4.

Selon un autre perfectionnement des dispositifs conformes à la figure 2a, les systèmes électrochromes utilisés peuvent comprendre en outre une électrode de polarisation transparente supplémentaire 9, qui est située entre les électrodes d'alimentation 1 et 2 d'une part et la paroi externe 10 d'autre part. Cette électrode de polarisation supplémentaire 9 ne possède aucun contact ni avec les électrodes d'alimentation 1 et 2, ni avec le liquide ou gel qui est contenu dans le volume V, ni avec les électrodes de polarisation 3 et 4. Par exemple, une couche intermédiaire 8 d'un matériau isolant peut être intercalée entre l'électrode 9 et les électrodes 1 et 2. L'électrode supplémentaire 9 est destinée à être connectée à une borne de référence de potentiel électrique. En particulier, l'une au moins des sources 21 et 22 peut posséder une borne de référence de potentiel. Celle-ci, et de préférence des bornes de référence de potentiel respectives des deux sources 21 et 22, peut (peuvent) alors être reliée(s) électriquement à l'électrode de polarisation supplémentaire 9 par une connexion additionnelle 23. Eventuellement, la source d'alimentation 20 peut aussi avoir une électrode de référence de potentiel qui est reliée par la connexion 23. L'électrode 9 assure un meilleur contrôle de la répartition du potentiel électrique à l'intérieur de l'ensemble du volume V, notamment au droit des intervalles de séparation inter-électrode I.

Le dispositif de la figure 2b correspond à celui de la figure 2a, avec une seule source électrique de polarisation qui remplit les fonctions des deux sources 21 et 22 de la figure 2a. Ainsi, à un instant du fonctionnement du dispositif où l'électrode d'alimentation 1 est reliée à la borne de sortie positive de la source 20 et l'électrode d'alimentation 2 à la borne de sortie négative de la source 20, l'unique source de polarisation, qui est encore référencée 21, est reliée par sa borne de sortie positive aux électrodes 1 et 4, et par sa borne de sortie négative aux électrodes 2 et 3. Le fonctionnement du dispositif est alors identique à celui qui a été décrit en relation avec la figure 2a.

Les systèmes électrochromes 100 des figures 3a et 3b comprennent tous les éléments des systèmes des figures 1 a et 1 b. En particulier, ils comprennent les électrodes 3 et 4 qui forment une paire de premières électrodes de polarisation. Mais ils comprennent en outre une paire de secondes électrodes de polarisation, qui sont référencées 6 et 7. Les électrodes 6 et 7 sont portées par la paroi externe 10, comme les électrodes d'alimentation 1 et 2, entre ces dernières et la paroi 10. Les électrodes 6 et 7 peuvent être isolées électriquement par rapport aux électrodes 1 et 2 par une couche intermédiaire 8 d'un matériau isolant. Les secondes électrodes de polarisation 6 et 7 sont en outre situées une à une au droit des électrodes d'alimentation 1 et 2, éventuellement avec les mêmes motifs sur la paroi externe 10. Ainsi, l'électrode de polarisation 6 est située en dessous de l'électrode d'alimentation 1, selon la direction orientée D, et l'électrode de polarisation 7 est située en dessous de l'électrode d'alimentation 2, selon la même direction D. La figure 3a illustre un tel système 100 avec une partition du volume V en cellules juxtaposées telle que chaque cellule 13 soit alimentée simultanément par les deux électrodes 1 et 2. Dans la partition de la figure 3b, chaque cellule 13 est alimentée par une seule des deux électrodes 1 et 2, avec une alternance entre ces deux électrodes d'alimentation entre des cellules 13 qui sont voisines

Le dispositif de la figure 4a, qui est selon l'invention, est formé en associant l'un des systèmes électrochromes 100 des figures 3a et 3b à trois sources électriques variables. Ces sources sont identiques à celles 20-22 qui ont été introduites précédemment en référence à la figure 2a, hormis les connexions des sources de polarisation 21 et 22. Les bornes de sortie de la source de polarisation 21 sont maintenant reliées aux électrodes de polarisation 3 et 6. Celle des bornes de sortie de la source 21 qui est positive est reliée à l'électrode 6 à un instant du fonctionnement du dispositif où l'électrode d'alimentation 1 est elle-même reliée à la borne de sortie positive de la source 20. La borne de sortie négative de la source 21 est alors reliée à l'électrode 3. Simultanément, la borne de sortie négative de la source de polarisation 22 est reliée à l'électrode de polarisation 7, et la borne de sortie positive de la source 22 est reliée à l'électrode 4. Les polarités des deux sources de polarisation 21 et 22 sont encore inversées en suivant les changements de polarité de la source d'alimentation 20. Un découplage est ainsi obtenu, entre les électrodes d'alimentation 1 et 2 d'une part, et les électrodes de polarisation 6 et 7 d'autre part. Toutefois, le fonctionnement du dispositif est identique à celui qui a été décrit en relation avec la figure 2a. L'utilisation de parois internes 12 qui sont étanches aux substances électroactives lorsque chaque cellule 13 n'est alimentée que par une seule des électrodes 1 et 2, l'utilisation du film isolant 5 ainsi que la connexion de bornes de référence de potentiel respectives des sources 20, 21 et 22 sont encore identiques à celles décrites antérieurement.

Enfin, la figure 4b illustre l'utilisation d'un système 100 conforme aux figures 3a et 3b avec deux sources électriques dans un dispositif selon l'invention : la source 20 pour alimenter le système en courant électrique et une unique source de polarisation 21. Cette utilisation peut être déduite de celle de la figure 4a, de la même façon que pour les figures 2a et 2b.

Il est entendu que l'invention peut être reproduite en adaptant des caractéristiques qui ont été citées à titre d'exemple, tout en conservant certains au moins des avantages mentionnés. En particulier, les valeurs de concentrations et/ou les dimensions des éléments du système électrochrome peuvent être modifiées pour chaque application qui est considérée. Des substances ioniques supplémentaires peuvent aussi être ajoutées à la composition du liquide ou gel, notamment pour augmenter sa conduction ionique.

## Revendications

1. Dispositif électrochrome comprenant :
- un système électrochrome transparent (100), permettant une vision distincte à travers ledit système, et comprenant lui-même :
- deux parois (10, 11) limitant un volume fermé (V), le système étant transparent pour une direction de regard traversant les parois et ledit volume fermé entre deux côtés opposés ;
- un liquide ou gel contenu dans le volume fermé (V) ;
- des premières et secondes substances électroactives réparties dans le liquide ou gel, avec des potentiels respectifs d'oxydo-réduction qui sont différents, certaines au moins des premières et secondes substances électroactives ayant un effet optique variable entre une forme oxydée et une forme réduite des dites substances ;
- une paire d'électrodes d'alimentation transparentes (1, 2), portées ensemble par une même (10) des deux parois ;
- une première source électrique variable (20) avec deux bornes de sortie, les deux bornes de sortie de la première source électrique variable (20) étant reliées respectivement aux électrodes d'alimentation (1, 2) pour alimenter le système (100) en courant électrique en appliquant entre les dites électrodes d'alimentation (1, 2) une tension électrique supérieure à la différence entre les potentiels respectifs d'oxydo-réduction des premières et secondes substances électroactives, de façon à transférer des électrons vers ou à partir de certaines au moins des substances électroactives, le transfert d'électrons s'effectuant d'une façon inverse entre les dites premières et secondes substances électroactives à un même instant d'un fonctionnement du système ;
**caractérisé en ce que** le dispositif comprend au moins une deuxième source électrique variable (21, 22), et ledit système comprend en outre :
- une paire de premières électrodes de polarisation transparentes (3, 4), lesdites premières électrodes de polarisation (3, 4) étant portées ensemble par l'autre (11) des deux parois que celle (10) qui porte les électrodes d'alimentation (1, 2) et n'ayant pas de contact avec les dites électrodes d'alimentation (1, 2) à l'intérieur du système, et lesdites premières électrodes de polarisation (3, 4) étant situées une-à-une en vis-à-vis des électrodes d'alimentation (1, 2), de part et d'autre du volume fermé selon une direction (D) perpendiculaire aux parois (10, 11) ; et
- au moins un film isolant électriquement (5) disposé pour supprimer un contact entre chaque première électrode de polarisation (3, 4) et le liquide ou gel contenu dans le volume fermé (V), de sorte que les substances électroactives ne sont pas oxydées ni réduites sur les premières électrodes de polarisation,
chacune des premières électrodes de polarisation (3, 4) et celle des électrodes d'alimentation (1, 2) qui est située en vis-à-vis de ladite première électrode de polarisation étant reliées en outre respectivement à deux bornes de sortie de ladite au moins une deuxième source électrique variable (21, 22), avec des polarités respectives qui sont identiques pour les bornes de sortie des dites première (20) et au moins une deuxième sources électriques (21, 22) qui sont reliées à une même des électrodes d'alimentation (1, 2), les dites polarités étant déterminées respectivement par rapport à l'autre borne de sortie de la source électrique correspondante.

2. Dispositif électrochrome selon la revendication 1, dans lequel ladite au moins une deuxième source électrique (21, 22) ne comporte qu'une seule deuxième source électrique variable (21), et dans lequel :
une première des bornes de sortie de la deuxième source électrique (21) est reliée à l'une des premières électrodes de polarisation (3),
une seconde des bornes de sortie de ladite deuxième source électrique (21) est reliée à l'électrode d'alimentation (1) qui est située en vis-à-vis de la première électrode de polarisation (3) à laquelle est reliée la première des bornes de sortie de ladite deuxième source électrique,
la première des bornes de sortie de ladite deuxième source électrique (21) est en outre reliée à l'autre électrode d'alimentation (2) que celle à laquelle est reliée la seconde des bornes de sortie de ladite deuxième source électrique, et
la seconde des bornes de sortie de ladite deuxième source électrique (21) est en outre reliée à l'autre première électrode de polarisation (4) que celle à laquelle est reliée la première des bornes de sortie de ladite deuxième source électrique.

3. Dispositif électrochrome selon la revendication 1, dans lequel ladite au moins une deuxième source électrique variable comprend une deuxième source électrique variable (21) et une troisième source électrique variable (22), une seconde borne de sortie de la deuxième source électrique (21) est reliée à l'électrode d'alimentation (1) qui est située en vis-à-vis de la première électrode de polarisation (3) à laquelle est reliée ladite première borne de sortie de ladite deuxième source électrique, ladite troisième source électrique variable (22) ayant une première borne de sortie reliée à l'autre électrode d'alimentation (2) que celle à laquelle est reliée l'une des bornes de sortie de ladite deuxième source électrique (21), et ayant une seconde borne de sortie reliée à l'autre première électrode de polarisation (4) que celle à laquelle est reliée l'autre borne de sortie de ladite deuxième source électrique (21),
avec des polarités respectives qui sont identiques pour les bornes de sortie des dites première (20) et deuxième (21) ou troisième (22) sources électriques qui sont reliées à une même des électrodes d'alimentation (1, 2), les dites polarités étant déterminées respectivement par rapport à l'autre borne de sortie de la source électrique correspondante.

4. Dispositif selon l'une quelconque des revendications 1 à 3, dans lequel le système électrochrome (100) comprend en outre une électrode de polarisation transparente supplémentaire (9), située entre les électrodes d'alimentation (1, 2) d'une part et la paroi (10) qui porte les dites électrodes d'alimentation d'autre part, ladite électrode de polarisation supplémentaire n'ayant de contact ni avec les dites électrodes d'alimentation, ni avec le liquide ou gel contenu dans le volume fermé (V), ni avec les dites premières électrodes de polarisation (3, 4),
et dans lequel l'une au moins des sources électriques (20, 21, 22) possède une borne de référence de potentiel électrique distincte des bornes de sortie de la dite source électrique, ladite borne de référence de potentiel électrique étant reliée à l'électrode de polarisation supplémentaire (9).

5. Dispositif électrochrome comprenant :
- un système électrochrome transparent (100), permettant une vision distincte à travers ledit système, et comprenant lui-même :
- deux parois (10, 11) limitant un volume fermé (V), le système étant transparent pour une direction de regard traversant les parois et ledit volume fermé entre deux côtés opposés ;
- un liquide ou gel contenu dans le volume fermé (V) ;
- des premières et secondes substances électroactives réparties dans le liquide ou gel, avec des potentiels respectifs d'oxydo-réduction qui sont différents, certaines au moins des premières et secondes substances électroactives ayant un effet optique variable entre une forme oxydée et une forme réduite des dites substances ;
- une paire d'électrodes d'alimentation transparentes (1, 2), portées ensemble par une même (10) des deux parois ;
- une première source électrique variable (20) avec deux bornes de sortie, les deux bornes de sortie de la première source électrique variable (20) étant reliées respectivement aux électrodes d'alimentation (1, 2) pour alimenter le système (100) en courant électrique en appliquant entre les dites électrodes d'alimentation une tension électrique supérieure à la différence entre les potentiels respectifs d'oxydo-réduction des premières et secondes substances électroactives, de façon à transférer des électrons vers ou à partir de certaines au moins des substances électroactives, le transfert d'électrons s'effectuant d'une façon inverse entre les dites premières et secondes substances électroactives à un même instant d'un fonctionnement du système ;
**caractérisé en ce que** le dispositif comprend en outre au moins une deuxième source électrique variable (21, 22), et ledit système comprend en outre :
- une paire de premières électrodes de polarisation transparentes (3, 4), lesdites premières électrodes de polarisation étant portées ensemble par l'autre (11) des deux parois que celle (10) qui porte les électrodes d'alimentation (1, 2) et n'ayant pas de contact avec les dites électrodes d'alimentation (1, 2) à l'intérieur du système, et lesdites premières électrodes de polarisation (3, 4) étant situées une-à-une en vis-à-vis des électrodes d'alimentation (1, 2), de part et d'autre du volume fermé selon une direction (D) perpendiculaire aux parois (10, 11),
- au moins un film isolant électriquement (5) disposé pour supprimer un contact entre chaque première électrode de polarisation (3, 4) et le liquide ou gel contenu dans le volume fermé (V), de sorte que les substances électroactives ne sont pas oxydées ni réduites sur les premières électrodes de polarisation ; et
- une paire de secondes électrodes de polarisation transparentes (6, 7), situées entre les électrodes d'alimentation (1, 2) d'une part et la paroi (10) qui porte les dites électrodes d'alimentation (1, 2) d'autre part, et lesdites secondes électrodes de polarisation (6, 7) étant aussi situées une-à-une au droit des dites électrodes d'alimentation (1, 2) selon la direction (D) perpendiculaire aux parois (10, 11), sans contact avec lesdites électrodes d'alimentation à l'intérieur du système,
chacune des dites premières électrodes de polarisation (3, 4) et celle des dites secondes électrodes de polarisation (6, 7) qui est située au droit de ladite électrode d'alimentation (1, 2) qui est située en vis-à-vis de ladite première électrode de polarisation (3, 4) selon la direction (D) perpendiculaire aux parois (10, 11), étant reliées respectivement à deux bornes de sortie de ladite au moins une deuxième source électrique variable, avec des polarités respectives qui sont identiques pour chaque borne de sortie de la première source électrique (20) qui est reliée à l'une des électrodes d'alimentation (1, 2) et pour celle des bornes de sortie de la au moins une deuxième source électrique (21, 22) qui est reliée à celle des secondes électrodes de polarisation (6, 7) qui est située au droit de ladite électrode d'alimentation, les dites polarités étant déterminées respectivement par rapport à l'autre borne de sortie de la source électrique correspondante.

6. Dispositif électrochrome selon la revendication 5, dans lequel ladite au moins une deuxième source électrique ne comporte qu'une seule deuxième source électrique variable (21), et dans lequel :
une première des bornes de sortie de la deuxième source électrique (21) est reliée à l'une des premières électrodes de polarisation (3),
une seconde des bornes de sortie de ladite deuxième source électrique (21) est reliée à la seconde électrode de polarisation (6) qui est située au droit de la première électrode de polarisation (3) à laquelle est reliée la première des bornes de sortie de ladite deuxième source électrique,
la première des bornes de sortie de ladite deuxième source électrique (21) est en outre reliée à l'autre seconde électrode de polarisation (7) que celle à laquelle est reliée la seconde des bornes de sortie de ladite deuxième source électrique,
et la seconde des bornes de sortie de la deuxième source électrique (21) est en outre reliée à l'autre première électrode de polarisation (4) que celle à laquelle est reliée la première des bornes de sortie de ladite deuxième source électrique.

7. Dispositif électrochrome selon la revendication 5, dans lequel ladite au moins une deuxième source électrique variable comprend une deuxième source électrique variable (21) et une troisième source électrique variable (22), une seconde borne de sortie de la deuxième source électrique (21) est reliée à la seconde électrode de polarisation (6) qui est située au droit de la première électrode de polarisation (3) à laquelle est reliée ladite première borne de sortie de ladite deuxième source électrique, ladite troisième source électrique variable (22) ayant une première borne de sortie reliée à l'autre seconde électrode de polarisation (7) que celle à laquelle est reliée l'une des bornes de sortie de ladite deuxième source électrique (21), et ayant une seconde borne de sortie reliée à l'autre première électrode de polarisation (4) que celle à laquelle est reliée l'autre borne de sortie de ladite deuxième source électrique (21),
avec des polarités respectives qui sont identiques pour les bornes de sortie des dites première (20) et deuxième (21) ou troisième (22) sources électriques qui sont reliées à l'une des électrodes d'alimentation (1, 2) et l'une des secondes électrodes de polarisation (6, 7) situées au droit l'une de l'autre, les dites polarités étant déterminées respectivement par rapport à l'autre borne de sortie de la source électrique correspondante.

8. Dispositif électrochrome selon l'une quelconque des revendications précédentes, dans lequel les premières substances électroactives dans la forme oxydée des dites premières substances électroactives ont chacune une charge électrique supérieure à une charge électrique de chaque seconde substance électroactive dans la forme réduite des dites secondes substances électroactives.

9. Dispositif électrochrome selon l'une quelconque des revendications précédentes, formant une partie au moins d'un verre de lunettes, d'un verre de masque, d'une lentille optique, d'une visière de casque, d'un hublot d'avion ou d'un vitrage.

10. Dispositif électrochrome selon l'une quelconque des revendications 1 à 10, comprenant en outre un réseau de parois internes (12) formant une partition du volume fermé (V) en cellules (13) juxtaposées parallèlement aux parois (10, 11) qui limitent ledit volume fermé, les dites parois internes étant perpendiculaires aux parois qui limitent ledit volume fermé, et dans lequel les deux électrodes d'alimentation (1, 2) sont chacune en contact avec le liquide ou gel contenu dans chaque cellule, et le liquide ou gel contenu dans ladite cellule contenant à la fois les premières et secondes substances électroactives.

11. Dispositif électrochrome selon l'une quelconque des revendications 1 à 10, comprenant en outre un réseau de parois internes (12) formant une partition du volume fermé (V) en cellules (13) juxtaposées parallèlement aux parois (10, 11) qui limitent ledit volume fermé, les dites parois internes étant perpendiculaires aux parois qui limitent ledit volume fermé, et dans lequel, pour certaines au moins des cellules, une seule des deux électrodes d'alimentation (1, 2) est en contact avec le liquide ou gel contenu dans chaque cellule, une première des dites cellules qui est alimentée par l'une des électrodes d'alimentation (1) étant adjacente avec une seconde des dites cellules qui est alimentée par l'autre électrode d'alimentation (2), avec un pont ionique (14) entre les dites première et seconde cellules.

12. Dispositif électrochrome selon la revendication 12, dans lequel certaines au moins des parois internes (12) s'étendent en direction de celle des parois (11) qui porte les premières électrodes de polarisation (3, 4), selon la direction (D) perpendiculaire aux parois (10, 11) qui limitent le volume fermé, jusqu'à fermer lesdites cellules du côté de ladite paroi qui porte les premières électrodes de polarisation pour éviter que des substances électroactives qui sont à proximité des dites premières électrodes de polarisation ne passent d'une cellule (13) à une cellule voisine.

13. Dispositif électrochrome selon la revendication 12 ou 13, dans lequel le liquide ou gel contient des premières substances électroactives sans secondes substances électroactives à l'intérieur des cellules (13) alimentées par l'une des électrodes d'alimentation (1), et des secondes substances électroactives sans premières substances électroactives à l'intérieur des cellules (13) alimentées par l'autre électrode d'alimentation (2).

## Patentansprüche

1. Elektrochrome Vorrichtung, die enthält:
- ein transparentes elektrochromes System (100), das eine deutliche Sicht durch das System hindurch erlaubt und selbst enthält:
- zwei Wände (10, 11), die ein geschlossenes Volumen (V) begrenzen, wobei das System für eine die Wände und das geschlossene Volumen zwischen zwei gegenüberliegenden Seiten durchquerende Blickrichtung transparent ist;
- eine Flüssigkeit oder Gel, die/das in dem geschlossenen Volumen (V) enthalten ist;
- erste und zweite elektroaktive Substanzen, die in der Flüssigkeit oder dem Gel verteilt sind, mit jeweils unterschiedlichen Oxydoreduktionspotentialen, wobei mindestens bestimmte der ersten und zweiten elektroaktiven Substanzen eine variable optische Wirkung zwischen einer oxidierten Form und einer reduzierten Form der Substanzen haben;
- ein Paar von transparenten Speiseelektroden (1, 2), die gemeinsam von der gleichen (10) der zwei Wände getragen werden;
- eine erste variable Stromquelle (20) mit zwei Ausgangsklemmen, wobei die zwei Ausgangsklemmen der ersten variablen Stromquelle (20) je mit den Speiseelektroden (1, 2) verbunden sind, um das System (100) mit elektrischem Strom zu speisen, indem zwischen den Speiseelektroden (1, 2) eine elektrische Spannung angelegt wird, die höher ist als die Differenz zwischen den jeweiligen Oxydoreduktionspotentialen der ersten und zweiten elektroaktiven Substanzen, um Elektronen zu oder von mindestens bestimmten der elektroaktiven Substanzen zu übertragen, wobei die Elektronenübertragung umgekehrt zwischen den ersten und zweiten elektroaktiven Substanzen zum gleichen Zeitpunkt eines Betriebs des Systems erfolgt;
**dadurch gekennzeichnet, dass** die Vorrichtung mindestens eine zweite variable Stromquelle (21, 22) enthält und das System außerdem enthält:
- ein Paar erster transparenter Polarisationselektroden (3, 4), wobei die ersten Polarisationselektroden (3, 4) gemeinsam von der anderen (11) der zwei Wände als derjenigen (10) getragen werden, die die Speiseelektroden (1, 2) trägt, und keinen Kontakt mit den Speiseelektroden (1, 2) innerhalb des Systems haben, und die ersten Polarisationselektroden (3, 4) sich hintereinander gegenüber den Speiseelektroden (1, 2) zu beiden Seiten des geschlossenen Volumens gemäß einer Richtung (D) lotrecht zu den Wänden (10, 11) befinden; und
- mindestens eine elektrisch isolierende Folie (5), die angeordnet ist, um einen Kontakt zwischen jeder ersten Polarisationselektrode (3, 4) und der/dem in dem geschlossenen Volumen (V) enthaltenen Flüssigkeit oder Gel zu beseitigen, so dass die elektroaktiven Substanzen auf den ersten Polarisationselektroden weder oxidiert noch reduziert werden,
wobei jede der ersten Polarisationselektroden (3, 4) und diejenige der Speiseelektroden (1, 2), die sich gegenüber der ersten Polarisationselektrode befindet, außerdem je mit zwei Ausgangsklemmen der mindestens einen zweiten variablen Stromquelle (21, 22) verbunden sind, mit jeweiligen Polaritäten, die für die Ausgangsklemmen der ersten (20) und mindestens einen zweiten Stromquelle (21, 22) gleich sind, die mit der gleichen der Speiseelektroden (1, 2) verbunden sind, wobei die Polaritäten jeweils bezüglich der anderen Ausgangsklemme der entsprechenden Stromquelle bestimmt werden.

2. Elektrochrome Vorrichtung nach Anspruch 1, wobei die mindestens eine zweite Stromquelle (21, 22) nur eine einzige zweite variable Stromquelle (21) aufweist, und wobei:
eine erste der Ausgangsklemmen der zweiten Stromquelle (21) mit einer der ersten Polarisationselektroden (3) verbunden ist,
eine zweite der Ausgangsklemmen der zweiten Stromquelle (21) mit der Speiseelektrode (1) verbunden ist, die sich gegenüber der ersten Polarisationselektrode (3) befindet, mit der die erste der Ausgangsklemmen der zweiten Stromquelle verbunden ist,
die erste der Ausgangsklemmen der zweiten Stromquelle (21) außerdem mit der anderen Speiseelektrode (2) als derjenigen verbunden ist,
mit der die zweite der Ausgangsklemmen der zweiten Stromquelle verbunden ist, und
die zweite der Ausgangsklemmen der zweiten Stromquelle (21) außerdem mit der anderen ersten Polarisationselektrode (4) als derjenigen verbunden ist, mit der die erste der Ausgangsklemmen der zweiten Stromquelle verbunden ist.

3. Elektrochrome Vorrichtung nach Anspruch 1, wobei die mindestens eine zweite variable Stromquelle eine zweite variable Stromquelle (21) und eine dritte variable Stromquelle (22) enthält, eine zweite Ausgangsklemme der zweiten Stromquelle (21) mit der Speiseelektrode (1) verbunden ist, die sich gegenüber der ersten Polarisationselektrode (3) befindet, mit der die erste Ausgangsklemme der zweiten Stromquelle verbunden ist, wobei eine erste Ausgangsklemme der dritten variablen Stromquelle (22) mit der anderen Speiseelektrode (2) als derjenigen verbunden ist, mit der eine der Ausgangsklemmen der zweiten Stromquelle (21) verbunden ist, und eine zweite Ausgangsklemme mit der anderen ersten Polarisationselektrode (4) als derjenigen verbunden ist, mit der die andere Ausgangsklemme der zweiten Stromquelle (21) verbunden ist,
mit jeweiligen Polaritäten, die für die Ausgangsklemmen der ersten (20) und zweiten (21) oder dritten (22) Stromquelle gleich sind, die mit der gleichen der Speiseelektroden (1, 2) verbunden sind, wobei die Polaritäten je bezüglich der anderen Ausgangsklemme der entsprechenden Stromquelle bestimmt werden.

4. Vorrichtung nach einem der Ansprüche 1 bis 3, wobei das elektrochrome System (100) außerdem eine zusätzliche transparente Polarisationselektrode (9) enthält, die sich zwischen den Speiseelektroden (1, 2) einerseits und der die Speiseelektroden tragenden Wand (10) andererseits befindet, wobei die zusätzliche Polarisationselektrode keinen Kontakt mit den Speiseelektroden noch mit der/dem in dem geschlossenen Volumen (V) enthaltenen Flüssigkeit oder Gel, noch mit den ersten Polarisationselektroden (3, 4) hat,
und wobei mindestens eine der Stromquellen (20, 21, 22) eine elektrische Bezugspotentialklemme besitzt, die sich von den Ausgangsklemmen der Stromquelle unterscheidet, wobei die elektrische Bezugspotentialklemme mit der zusätzlichen Polarisationselektrode (9) verbunden ist.

5. Elektrochrome Vorrichtung, die enthält:
- ein transparentes elektrochromes System (100), das eine deutliche Sicht durch das System erlaubt und selbst enthält:
- zwei Wände (10, 11), die ein geschlossenes Volumen (V) begrenzen, wobei das System für eine die Wände und das geschlossene Volumen zwischen zwei gegenüberliegenden Seiten durchquerende Blickrichtung transparent ist;
- eine Flüssigkeit oder ein Gel, die/das in dem geschlossenen Volumen (V) enthalten ist;
- erste und zweite elektroaktive Substanzen, die in der Flüssigkeit oder dem Gel verteilt sind, mit jeweils unterschiedlichen Oxydoreduktionspotentialen, wobei mindestens bestimmte der ersten und zweiten elektroaktiven Substanzen eine variable optische Wirkung zwischen einer oxidierten Form und einer reduzierten Form der Substanzen haben;
- ein Paar von transparenten Speiseelektroden (1, 2), die gemeinsam von der gleichen (10) der zwei Wände getragen werden;
- eine erste variable Stromquelle (20) mit zwei Ausgangsklemmen, wobei die zwei Ausgangsklemmen der ersten variablen Stromquelle (20) je mit den Speiseelektroden (1, 2) verbunden sind, um das System (100) mit elektrischem Strom zu speisen, indem zwischen den Speiseelektroden eine elektrische Spannung angelegt wird, die höher ist als die Differenz zwischen den jeweiligen Oxydoreduktionspotentialen der ersten und zweiten elektroaktiven Substanzen, um Elektronen zu oder von mindestens bestimmten der elektroaktiven Substanzen zu übertragen, wobei die Elektronenübertragung umgekehrt zwischen den ersten und zweiten elektroaktiven Substanzen zum gleichen Zeitpunkt eines Betriebs des Systems erfolgt;
**dadurch gekennzeichnet, dass** die Vorrichtung außerdem mindestens eine zweite variable Stromquelle (21, 22) enthält und das System außerdem enthält:
- ein Paar erster transparenter Polarisationselektroden (3, 4), wobei die ersten Polarisationselektroden gemeinsam von der anderen (11) der zwei Wände als derjenigen (10) getragen werden, die die Speiseelektroden (1, 2) trägt, und keinen Kontakt mit den Speiseelektroden (1, 2) innerhalb des Systems haben, und die ersten Polarisationselektroden (3, 4) sich hintereinander gegenüber den Speiseelektroden (1, 2) zu beiden Seiten des geschlossenen Volumens gemäß einer Richtung (D) lotrecht zu den Wänden (10, 11) befinden,
- mindestens eine elektrisch isolierende Folie (5), die angeordnet ist, um einen Kontakt zwischen jeder ersten Polarisationselektrode (3, 4) und der/dem in dem geschlossenen Volumen (V) enthaltenen Flüssigkeit oder Gel zu beseitigen, so dass die elektroaktiven Substanzen auf den ersten Polarisationselektroden weder oxidiert noch reduziert werden, und
- ein Paar zweiter transparenter Polarisationselektroden (6, 7), die sich zwischen den Speiseelektroden (1, 2) einerseits und der die Speiseelektroden (1, 2) tragenden Wand (10) andererseits befinden, und die zweiten Polarisationselektroden (6, 7) sich auch hintereinander vor den Speiseelektroden (1, 2) gemäß der Richtung (D) lotrecht zu den Wänden (10, 11) befinden, ohne Kontakt mit den Speiseelektroden im Inneren des Systems,
wobei jede der ersten Polarisationselektroden (3, 4) und diejenige der zweiten Polarisationselektroden (6, 7), die sich vor der Speiseelektrode (1, 2) befindet, die sich gegenüber der ersten Polarisationselektrode (3, 4) gemäß der Richtung (D) lotrecht zu den Wänden (10, 11) befindet, je mit zwei Ausgangsklemmen der mindestens einen zweiten variablen Stromquelle verbunden sind, mit jeweiligen Polaritäten, die für jede Ausgangsklemme der ersten Stromquelle (20), die mit einer der Speiseelektroden (1, 2) verbunden ist, und für diejenige der Ausgangsklemmen der mindestens einen zweiten Stromquelle (21, 22), die mit derjenigen der zweiten Polarisationselektroden (6, 7) verbunden ist, die sich vor der Speiseelektrode befindet, gleich sind, wobei die Polaritäten je bezüglich der anderen Ausgangsklemme der betreffenden Stromquelle bestimmt werden.

6. Elektrochrome Vorrichtung nach Anspruch 5, wobei die mindestens eine zweite Stromquelle nur eine einzige zweite variable Stromquelle (21) aufweist, und wobei:
eine erste der Ausgangsklemmen der zweiten Stromquelle (21) mit einer der ersten Polarisationselektroden (3) verbunden ist,
eine zweite der Ausgangsklemmen der zweiten Stromquelle (21) mit der zweiten Polarisationselektrode (6) verbunden ist, die sich vor der ersten Polarisationselektrode (3) befindet, mit der die erste der Ausgangsklemmen der zweiten Stromquelle verbunden ist,
die erste der Ausgangsklemmen der zweiten Stromquelle (21) außerdem mit der anderen zweiten Polarisationselektrode (7) als derjenigen verbunden ist, mit der die zweite der Ausgangsklemmen der zweiten Stromquelle verbunden ist,
und die zweite der Ausgangsklemmen der zweiten Stromquelle (21) außerdem mit der anderen ersten Polarisationselektrode (4) als derjenigen verbunden ist, mit der die erste der Ausgangsklemmen der zweiten Stromquelle verbunden ist.

7. Elektrochrome Vorrichtung nach Anspruch 5, wobei die mindestens eine zweite variable Stromquelle eine zweite variable Stromquelle (21) und eine dritte variable Stromquelle (22) enthält, eine zweite Ausgangsklemme der zweiten Stromquelle (21) mit der zweiten Polarisationselektrode (6) verbunden ist, die sich vor der ersten Polarisationselektrode (3) befindet, mit der die erste Ausgangsklemme der zweiten Stromquelle verbunden ist, wobei eine erste Ausgangsklemme der dritten variablen Stromquelle (22) mit der anderen zweiten Polarisationselektrode (7) als derjenigen verbunden ist, mit der eine der Ausgangsklemmen der zweiten Stromquelle (21) verbunden ist, und eine zweite Ausgangsklemme mit der anderen ersten Polarisationselektrode (4) als derjenigen verbunden ist, mit der die andere Ausgangsklemme der zweiten Stromquelle (21) verbunden ist,
mit jeweiligen Polaritäten, die für die Ausgangsklemmen der ersten (20) und zweiten (21) oder dritten (22) Stromquelle gleich sind, die mit einer der Speiseelektroden (1, 2) und einer der zweiten Polarisationselektroden (6, 7) verbunden sind, die sich voreinander befinden, wobei die Polaritäten je bezüglich der anderen Ausgangsklemme der betreffenden Stromquelle bestimmt werden.

8. Elektrochrome Vorrichtung nach einem der vorhergehenden Ansprüche, wobei die ersten elektroaktiven Substanzen in der oxidierten Form der ersten elektroaktiven Substanzen je eine elektrische Ladung höher als eine elektrische Ladung jeder zweiten elektroaktiven Substanz in der reduzierten Form der zweiten elektroaktiven Substanzen haben.

9. Elektrochrome Vorrichtung nach einem der vorhergehenden Ansprüche, die mindestens Teil eines Brillenglases, eines Maskenglases, einer optischen Linse, eines Helmvisiers, eines Flugzeug-Seitenfensters oder einer Verglasung ist.

10. Elektrochrome Vorrichtung nach einem der Ansprüche 1 bis 10, die außerdem eine Anordnung von Innenwänden (12) enthält, die eine Aufteilung des geschlossenen Volumens (V) in nebeneinander parallel zu den das geschlossene Volumen begrenzenden Wänden (10, 11) angeordnete Zellen (13) bilden, wobei die Innenwände lotrecht zu den das geschlossene Volumen begrenzenden Wänden sind, und wobei die zwei Speiseelektroden (1, 2) je mit der/dem in jeder Zelle enthaltenen Flüssigkeit oder Gel in Kontakt sind, und die/das in der Zelle enthaltene Flüssigkeit oder Gel sowohl die ersten als auch die zweiten elektroaktiven Substanzen enthält.

11. Elektrochrome Vorrichtung nach einem der Ansprüche 1 bis 10, die außerdem eine Anordnung von Innenwänden (12) enthält, die eine Aufteilung des geschlossenen Volumens (V) in nebeneinander parallel zu den das geschlossene Volumen begrenzenden Wänden (10, 11) angeordnete Zellen (13) bilden, wobei die Innenwände lotrecht zu den das geschlossene Volumen begrenzenden Wänden sind, und wobei zumindest für bestimmte der Zellen nur eine der zwei Speiseelektroden (1, 2) mit der/dem in jeder Zelle enthaltenen Flüssigkeit oder Gel in Kontakt ist, wobei eine erste der Zellen, die von einer der Speiseelektroden (1) gespeist wird, die einer zweiten der Zellen benachbart ist, die von der anderen Speiseelektrode (2) gespeist wird, mit einer Ionenbrücke (14) zwischen der ersten und der zweiten Zelle.

12. Elektrochrome Vorrichtung nach Anspruch 12, wobei zumindest bestimmte der Innenwände (12) sich in Richtung derjenigen der Wände (11) erstrecken, die die ersten Polarisationselektroden (3, 4) trägt, gemäß der Richtung (D) lotrecht zu den das geschlossene Volumen begrenzenden Wänden (10, 11), bis zum Schließen der Zellen auf der Seite der die ersten Polarisationselektroden tragenden Wand, um zu vermeiden, dass elektroaktive Substanzen, die sich in der Nähe der ersten Polarisationselektroden befinden, von einer Zelle (13) zu einer benachbarten Zelle übergehen.

13. Elektrochrome Vorrichtung nach Anspruch 12 oder 13, wobei die Flüssigkeit oder das Gel erste elektroaktive Substanzen ohne zweite elektroaktive Substanzen im Inneren der Zellen (13) enthält, die von einer der Speiseelektroden (1) gespeist werden, und zweite elektroaktive Substanzen ohne erste elektroaktive Substanzen im Inneren der Zellen (13) enthält, die von der anderen Speiseelektrode (2) gespeist werden.

## Claims

1. Electrochromic device comprising:
- a transparent electrochromic system (100) allowing clear vision through said system, and comprising itself:
- two walls (10, 11) defining a closed volume (V), the system being transparent for a gaze direction passing through the walls and said closed volume, between two opposite sides;
- a liquid or gel contained in the closed volume (V);
- first and second electroactive substances distributed in the liquid or gel, having respective oxidation/reduction potentials that are different, certain at least of the first and second electroactive substances having an optical effect that changes between an oxidized form and a reduced form of said substances;
- a pair of transparent supply electrodes (1, 2), both borne by one and the same (10) of the two walls; and
- a first variable electrical source (20) having two output terminals, the two output terminals of the first variable electrical source (20) being connected to the supply electrodes (1, 2), respectively, in order to supply the system (100) with electrical current by applying between said supply electrodes (1, 2) an electrical voltage higher than the difference between the respective oxidation/reduction potentials of the first and second electroactive substances, so as to transfer electrons to or from certain at least of the electroactive substances, the transfer of electrons taking place inversely between said first and second electroactive substances at a given instant of operation of the system,
**characterized in that** the device comprises at least one second variable electrical source (21, 22) and said system furthermore comprises:
- a pair of first transparent polarisation electrodes (3, 4), said first polarisation electrodes (3, 4) both borne by the other (11) of the two walls than that (10) which bears the supply electrodes (1, 2) and not making contact with said supply electrodes (1, 2) inside the system, and said first polarisation electrodes (3, 4) being located one-to-one directly opposite the supply electrodes (1, 2), on either side of the closed volume in a direction (D) perpendicular to the walls (10, 11); and
- at least one electrically insulating film (5) placed to prevent contact between each first polarisation electrode (3, 4) and the liquid or gel contained in the closed volume (V), so that the electroactive substances are neither oxidized nor reduced on the first polarisation electrodes,
each of the first polarisation electrodes (3, 4) and that of the supply electrodes (1, 2) which is located directly opposite said first polarisation electrode being respectively furthermore connected to two output terminals of said at least one second variable electrical source (21, 22), having respective polarities that are identical for the output terminals of said first (20) and at least one second electrical sources (21, 22), which are connected to a given one of the supply electrodes (1, 2), said polarities being defined respectively relative to the other output terminal of the corresponding electrical source.

2. Electrochromic device according to Claim 1, in which said at least one second electrical source (21, 22) comprises only a single second variable electrical source (21), and in which:
a first of the output terminals of the second electrical source (21) is connected to one of the first polarisation electrodes (3);
a second of the output terminals of said second electrical source (21) is connected to the supply electrode (1) which is located directly opposite the first polarisation electrode (3) to which the first of the output terminals of said second electrical source is connected;
the first of the output terminals of said second electrical source (21) is furthermore connected to the other supply electrode (2) than that to which the second of the output terminals of said second electrical source is connected; and
the second of the output terminals of said second electrical source (21) is furthermore connected to the other first polarisation electrode (4) than that to which the first of the output terminals of said second electrical source is connected.

3. Electrochromic device according to Claim 1, in which said at least one second variable electrical source comprises a second variable electrical source (21) and a third variable electrical source (22), a second output terminal of the second electrical source (21) is connected to the supply electrode (1) which is located directly opposite the first polarisation electrode (3) to which said first output terminal of said second electrical source is connected, said third variable electrical source (22) having a first output terminal connected to the other supply electrode (2) than that to which one of the output terminals of said second electrical source (21) is connected, and having a second output terminal connected to the other first polarisation electrode (4) than that to which the other output terminal of said second electrical source (21) is connected,
having respective polarities that are identical for the output terminals of said first (20) and second (21) or third (22) electrical sources that are connected to a given one of the supply electrodes (1, 2), said polarities being defined respectively relative to the other output terminal of the corresponding electrical source.

4. Device according to any one of Claims 1 to 3, in which the electrochromic system (100) furthermore comprises an additional transparent polarisation electrode (9) located between the supply electrodes (1, 2), on the one hand, and the wall (10) that bears said supply electrodes, on the other hand, said additional polarisation electrode making contact neither with said supply electrodes, nor with the liquid or gel contained in the closed volume (V), nor with said first polarisation electrodes (3, 4),
and in which one at least of the electrical sources (20, 21, 22) possesses an electrical reference potential terminal separate from the output terminals of said electrical source, said electrical reference potential terminal being connected to the additional polarisation electrode (9).

5. Electrochromic device comprising:
- a transparent electrochromic system (100) allowing clear vision through said system, and itself comprising:
- two walls (10, 11) defining a closed volume (V), the system being transparent for a gaze direction passing through the walls and said closed volume, between two opposite sides;
- a liquid or gel contained in the closed volume (V);
- first and second electroactive substances distributed in the liquid or gel, having respective oxidation/reduction potentials that are different, certain at least of the first and second electroactive substances having an optical effect that changes between an oxidized form and a reduced form of said substances;
- a pair of transparent supply electrodes (1, 2) both borne by one and the same (10) of the two walls; and
- a first variable electrical source (20) having two output terminals, the two output terminals of the first variable electrical source (20) being connected to the supply electrodes (1, 2), respectively, in order to supply the system (100) with electrical current by applying between said supply electrodes an electrical voltage higher than the difference between the respective oxidation/reduction potentials of the first and second electroactive substances, so as to transfer electrons to or from certain at least of the electroactive substances, the transfer of electrons taking place inversely between said first and second electroactive substances at a given instant of operation of the system,
**characterized in that** the device furthermore comprises at least one second variable electrical source (21, 22) and said system furthermore comprises:
- a pair of first transparent polarisation electrodes (3, 4), said first polarisation electrodes both borne by the other (11) of the two walls than that (10) which bears the supply electrodes (1, 2) and not making contact with said supply electrodes (1, 2) inside the system, and said first polarisation electrodes (3, 4) being located one-to-one directly opposite the supply electrodes (1, 2), on either side of the closed volume in a direction (D) perpendicular to the walls (10, 11);
- at least one electrically insulating film (5) placed to prevent contact between each first polarisation electrode (3, 4) and the liquid or gel contained in the closed volume (V), so that the electroactive substances are neither oxidized nor reduced on the first polarisation electrodes; and
- a pair of second transparent polarisation electrodes (6, 7), located between the supply electrodes (1, 2) on the one hand and the wall (10) that bears said supply electrodes (1, 2) on the other hand, and said second polarisation electrodes (6, 7) also being located one-to-one in front of said supply electrodes (1, 2) in the direction (D) perpendicular to the walls (10, 11), without making contact with said supply electrodes inside the system,
each of said first polarisation electrodes (3, 4) and that of said second polarisation electrodes (6, 7) which is located in front of said supply electrode (1, 2) that is located directly opposite said first polarisation electrode (3, 4) in the direction (D) perpendicular to the walls (10, 11) being respectively connected to two output terminals of said at least one second variable electrical source, having respective polarities that are identical for each output terminal of the first electrical source (20) which is connected to one of the supply electrodes (1, 2) and for that of the output terminals of the at least one second electrical source (21, 22) that is connected to that of the second polarisation electrodes (6, 7) which is located in front of said supply electrode, said polarities being defined respectively relative to the other output terminal of the corresponding electrical source.

6. Electrochromic device according to Claim 5, in which said at least one second electrical source comprises only a single second variable electrical source (21), and in which:
a first of the output terminals of the second electrical source (21) is connected to one of the first polarisation electrodes (3);
a second of the output terminals of said second electrical source (21) is connected to the second polarisation electrode (6) which is located in front of the first polarisation electrode (3) to which the first of the output terminals of said second electrical source is connected;
the first of the output terminals of said second electrical source (21) is furthermore connected to the other second polarisation electrode (7) than that to which the second of the output terminals of said second electrical source is connected; and
the second of the output terminals of the second electrical source (21) is furthermore connected to the other first polarisation electrode (4) than that to which the first of the output terminals of said second electrical source is connected.

7. Electrochromic device according to Claim 5, in which said at least one second variable electrical source comprises a second variable electrical source (21) and a third variable electrical source (22), a second output terminal of the second electrical source (21) is connected to the second polarisation electrode (6) which is located in front of the first polarisation electrode (3) to which said first output terminal of said second electrical source is connected, said third variable electrical source (22) having a first output terminal connected to the other second polarisation electrode (7) than that to which one of the output terminals of said second electrical source (21) is connected, and having a second output terminal connected to the other first polarisation electrode (4) than that to which the other output terminal of said second electrical source (21) is connected,
having respective polarities that are identical for the output terminals of said first (20) and second (21) or third (22) electrical sources that are connected to one of the supply electrodes (1, 2) and one of the second polarisation electrodes (6, 7) located in front of each other, said polarities being defined respectively relative to the other output terminal of the corresponding electrical source.

8. Electrochromic device according to any one of the preceding claims, in which the first electroactive substances in the oxidized form of said first electroactive substances each have an electric charge higher than an electric charge of each second electroactive substance in the reduced form of said second electroactive substances.

9. Electrochromic device according to any one of the preceding claims, forming at least one portion of a glass of a pair of spectacles, of a mask's glass, of an optical lens, of a helmet visor, of an aircraft porthole or of a glazing unit.

10. Electrochromic device according to any one of Claims 1 to 10, furthermore comprising a network of internal walls (12) partitioning the closed volume (V) into cells (13) that are juxtaposed parallel with the walls (10, 11) that limit said closed volume, said internal walls lying perpendicular to said walls that limit said closed volume, and in which the two supply electrodes (1, 2) each make contact with the liquid or gel contained in each cell, and the liquid or gel contained in said cell containing both the first and second electroactive substances.

11. Electrochromic device according to any one of Claims 1 to 10, furthermore comprising a network of internal walls (12) partitioning the closed volume (V) into cells (13) that are juxtaposed parallel with the walls (10, 11) that limit said closed volume, said internal walls lying perpendicular to the walls that limit said closed volume, and in which, for certain at least of the cells, a single of the two supply electrodes (1, 2) makes contact with the liquid or gel contained in each cell, a first of said cells, which is supplied via one of the supply electrodes (1), being adjacent to a second of said cells, which is supplied by the other supply electrode (2), there being an ionic bridge (14) between said first and second cells.

12. Electrochromic device according to Claim 12, in which certain at least of the internal walls (12) extend in the direction of that of the walls (11) which bears the first polarisation electrodes (3, 4), in the direction (D) perpendicular to the walls (10, 11) that limit the closed volume, as far as to close said cells from the side of said wall that bears the first polarisation electrodes in order to prevent electroactive substances that are in proximity to said first polarisation electrodes from passing from one cell (13) to a neighbouring cell.

13. Electrochromic device according to Claim 12 or 13, in which the liquid or gel contains first electroactive substances without second electroactive substances inside cells (13) supplied by one of the supply electrodes (1), and second electroactive substances without first electroactive substances inside cells (13) supplied by the other supply electrode (2).
